(19)

Europäisches
Patentamt
European
Patent Office
Office européen
des brevets

(11) **EP 4 545 351 A1**

(12) **EUROPEAN PATENT APPLICATION**

(43) Date of publication:
    **30.04.2025 Bulletin 2025/18**

(21) Application number: **23205668.9**

(22) Date of filing: **25.10.2023**

(51) International Patent Classification (IPC):
    ***B60L 53/63*** (2019.01)     ***B60L 53/64*** (2019.01)
    ***B60L 53/66*** (2019.01)     ***B60L 53/67*** (2019.01)
    ***B60L 53/68*** (2019.01)     ***B60L 55/00*** (2019.01)

(52) Cooperative Patent Classification (CPC):
    **B60L 53/63; B60L 53/64; B60L 53/66; B60L 53/67;
    B60L 53/68; B60L 55/00;** B60L 53/305; B60L 53/60;
    B60L 53/62; B60L 53/65; H02J 3/14; H02J 2203/20;
    H02J 2310/50

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **KH MA MD TN**

(71) Applicant: HONDA MOTOR CO., LTD.
    Minato-ku
    Tokyo 107-8556 (JP)

(72) Inventor: **Limmer, Dr. Steffen**
    **63073 Offenbach/Main (DE)**

(74) Representative: **Beder, Jens**
    **Mitscherlich PartmbB**
    **Patent- und Rechtsanwälte**
    **Karlstraße 7**
    **80333 München (DE)**

(54) **COMPUTER IMPLEMENTED METHOD FOR CHARGING VEHICLES IN AN ELECTRIC VEHICLE CHARGING SYSTEM AND SUCH SYSTEM BASED ON LEXICOGRAPHIC OPTIMIZATION IN A FIRST PHASE AND AN OBJECTIVE FUNCTION WITH WEIGHTED OBJECTIVES IN A SECOND PHASE**

(57)     The invention regards a system and computer implemented method for charging electric vehicle. In a first phase, first charging schedules are generated by performing a lexicographic optimization based on a hierarchy of the charging, wherein charging objectives to be considered in generating the first charging schedule for one or more charging stations of the electric vehicle charging system are obtained, and a hierarchy of the charging objectives is determined. Charging of the elec-tric vehicles is controlled according to the first charging schedule. In a second phase, second charging schedules are generated by performing an optimization based on an objective function with combined weighted objectives. The weights are learned in an offline optimization based on logged data from the first phase. In this second phase, charging of the electric vehicles is controlled according to the second charging schedule [Fig. 1]

Fig. 1

EP 4 545 351 A1

**Description**

This description is directed generally to the charging of electric vehicles, and in particular, to a computer-implemented method, a computer program product, and an electric vehicle charging system with which charging schedules for one or more charging stations are generated.

The uncontrolled charging of an increasing number of electric vehicles imposes significant challenges for the stable operation of the power grid. Smart charging allows the control of charging processes in a coordinated way and is seen as an important step towards a successful grid integration of electric vehicles. Furthermore, it can yield benefits to charging station operators and end users (electric vehicle drivers) compared to uncontrolled charging.

A smart charging system controls at least the charging powers at one or multiple charging stations charging batteries of the electric vehicles in order to achieve a certain objective, like minimizing energy cost and/or reducing peaks of electrical load. The component of the smart charging system, which computes charging powers with help of an optimization-based approach, is commonly termed charging scheduler.

Often, it is desired that the charging scheduler takes multiple (at least partly) conflicting objectives into account, like for example, minimizing the peak load, maximizing the number of charged vehicles and minimizing the degradation of the batteries. Since the objectives are conflicting, there is no solution (i.e., charging schedule), which optimizes all objectives together.

The most common approach to deal with this issue is to combine the multiple objectives in form of a weighted sum to one objective function of the optimization problem to be solved as disclosed in US 8 725 306 B2.

However, determining appropriate weights, which have to reflect the preferences in the objectives, is usually difficult. Further, in the context of charging management, it is often desirable to define the preferences in form of a hierarchy of the considered objectives, where an objective at a higher level of the hierarchy has a clearly higher priority than an objective at a lower level of the hierarchy. The weighted-sum approach makes it hard to dynamically adapt the hierarchy to changing preferences since this requires the adjustment of the weights for the objective function. US 2022/0327443 A1 suggests to overcome this problem by generating a hierarchy of objectives from a plurality of base objectives and then to solve single objective problems following the objectives in the hierarchy one after the other. Although such approach enables a dynamic adaptation of the objectives or their priority by using the hierarchy of a plurality of objectives and may be selected from an entirety of objectives available, it is hard to apply this approach to each and every situation. The reason is that for a growing number of participating charging stations and vehicles to be charged and the increasing complexity of the overall charging system, generating every charging schedule using the lexicographic optimisation is to slow and waiting times for renewing the charging system to be applied occur, which is undesired.

It is desired to overcome the above-mentioned drawbacks and to provide an improved method for scheduling charging of electric vehicles. More specifically, it is desired to provide a computer-implemented method, a computer program product, and an electric vehicle charging system with which a charging schedule can be generated with low effort and costs, but at the same time ensure that charging schedules can be generated in short time during regular use of the system. This is achieved by a method, a program, and an electric vehicle charging system according to the enclosed independent claims.

The present disclosure provides a computer-implemented method, a computer program, a scheduling apparatus and an electric vehicle charging system.

In one general aspect, a computer implemented method for scheduling charging and charging of electric vehicles accordingly by an electric vehicle charging system is provided. The method comprises two phases in which the charging schedules are generated in different ways. In the first phase, the method uses a lexicographic optimization of the objectives that are hierarchically ordered. The first phase comprises the steps of:

- obtaining charging objectives to be considered in generating the first charging schedule for one or more charging stations and a stationary battery of the charging system;

- determining a hierarchy of the charging objectives; and

- generating the first charging schedule by performing a lexicographic optimization based on the hierarchy of the charging objectives and

- charging the electric vehicles by applying the first charging schedule

In a second phase, the system no longer computes first charging schedules but switches to another principle of determining charging schedules, hereinafter referred to as second charging schedules. While in the first phase, the relatively slow but flexible lexicographic approach is used, the second phase applies an objective function with weighted objectives. The weights for such weighted sum approach are determined in an offline learning process, in which the weights result from an optimization of the weigths of the weighted sum objective function with respect to the schedules resulting from the lexicographic optimization. This is achieved based on logged data from the first phase. Then, once the weights are determined, the objective function comprising the weighted objectives is used to determine the second charging schedule. The learning of the weights can be done in any known way that is suitable to determine an optimized set of weights that results in second charging schedules closest possible to the first charging schedules resulting from the lexicographic optimization.

In another general aspect, a program is provided, wherein the program causes, when running on a computer or loaded onto a computer, the computer to execute the steps of the method described above.

In another general aspect, the vehicle charging system for scheduling charging of electric vehicles charging the vehicles accordingly is provided. The system comprises processing means configured to obtain charging objectives to be considered in generating a first charging schedule for one or more charging stations of the charging system, to determine a hierarchy of the charging objectives and to generate the first charging schedule by performing a lexicographic optimization based on the hierarchy of the charging objectives. The processing means is further configured to control the one or more charging stations according to the first charging schedule in the first phase. The system further comprises a memory configured to log data in the first phase. The processing means is further configured learn weights for an objective function with combined weighted objectives in an offline optimization based on the logged data from the first phase. Further, the processing means creates the second charging schedule by performing an optimization of the objective function and then applies the resulting second charging schedule to charge the electric vehicles accordingly.

In another general aspect, an electric vehicle charging system comprising the scheduling apparatus, charging stations for charging electric vehicles, a stationary battery and a controlling apparatus for controlling the charging stations and stationary battery charger based on the charging schedule is provided.

The system and/or any of the functions described herein may be implemented using individual hardware circuitry, using software functioning in conjunction with at least one of a programmed microprocessor, a general purpose computer, using an application specific integrated circuit (ASIC) and using one or more digital signal processors (DSPs). It is to be noted that the processing means used for determining the schedules and learning the weights for the objective function preferably comprises a plurality of distributed processors connected to exchange information as the following explanations will illustrate in greater detail. For the following explanations it is mostly referred to a charging process in order to achieve a concise wording. However, this does not limit the present invention and the term charging is used as a synonym for charging and/or discharging.

Further features and aspects are defined in the dependent claims.

With the method for scheduling the charging of electric vehicles, charging objectives to be considered in generating a charging schedule for one or more charging stations of a charging system are obtained from an entirety of base objectives. Relevant objectives can be selected in order to tailor the objectives to be considered to the actual situation. For example, based on an input of an operator of the charging system, a number of charging objectives are specified from the entirety of base objectives. Alternatively, charging objectives can be determined/updated automatically by analyzing or classifying user settings and user behavior and/or by detecting problems of the charging system, e.g., unbalanced utilization of charging stations, low utilization rate (possibly too expensive for the user), high peak load, defective charging stations, high electricity price, excess electricity of own power generation, portion of renewable energy etc., and by assigning a charging objective to each detected problem based on a table. Then, a hierarchy of the charging objectives is determined and the first charging schedule is generated by performing a lexicographic optimization based on the hierarchy of the charging objectives.

With the lexicographic optimization, preferences on the charging objectives that are to be considered are imposed by ordering the objective functions according to their importance or significance, rather than by assigning weights. After the objective functions are arranged by importance, the most important objective is solved first as a single-objective problem, defined as

$$\min f_1(x) \tag{1}$$

$$x \in X. \tag{2}$$

$y_1^*$ is the optimal solution of the first objective function $f_1(x)$ and X is the set of feasible solutions, defined by different constraints:

$$y_1^* := \min\{f_1(x) \mid x \in X\} \tag{3}$$

The second objective is then optimized again as a single-objective problem with an added constraint, defined as

$$f_1(x) \leq y_1^*. \tag{4}$$

Thus, according to the hierarchy of charging objectives, the results of the higher priority optimizations form additional constraints for the lower priority single-objective problems solved thereafter. The process is repeated for the remaining objectives/subproblems, wherein, in a step for solving a subproblem M, the optimal solution $y_{M-1}^*$ obtained in the previous step is added as a new constraint as described above. The algorithm terminates after solving the problems according to each charging objective defined in the hierarchy.

The method allows operators to easily configure the hierarchy of objectives considered by the charging scheduler. The hierarchy can even be changed dynamically at runtime. This is hard to realize with the traditional weighted-sum approach since it requires to predefine sets of weights for the different configurations and it is already difficult to determine appropriate weights for only one configuration. Furthermore, if the scheduler should be extended by additional potential objectives, new sets of weights have to be determined. As a solution to this problem, the present method employs lexicographic optimization, which does not rely on weights in a first phase of operation of the system. In this way, a flexible and easily expandable charging scheduler can be realized. However, it has turned out that an adaptation of the hierarchy or even the consideration of entirely new objectives is not necessary very often. But the system using only the hierarchical approach suffers from a lack of speed of the optimization process, because multiple optimization problems have to be solved to compute a charging schedule. Most of the time, the system operates with a constant hierarchy of objectives and, thus, the flexibility is not necessary. The present invention therefore allows to operate the entire system using the weighted sum approach, in which second charging schedules are determined based on an objective function with a sum of weighted objectives. Optimization routines using such weighted sums of objectives are much faster and specifically for growing and increasingly complex systems, performance is a great advantage, because recalculation of the charging schedules is required at short time intervals.

The present invention has the advantage that the weights for determining the objective function used in the second phase are determined offline using information logged during the first phase in which the system generates first charging schedules using the lexicographic optimization based on the hierarchy of objectives. While operation is possible using such optimization, data is collected (logged).These data provide information on the inputs for computing the first schedules using the lexicographic optimisation. For each first charging schedule that is generated, data is logged, defining the charging schedule in association with inputs (e.g., boundary conditions describing the situation, for which the respective schedule is generated) that were considered in generating the schedule. This maybe any kind of environmental condition, charging demand from the users, actual state of charge of the connected vehicles, date, time, temperature, and much more.

When the hierarchy does not change for a certain period of time, comparable first charging schedules are generated considering a plurality of different boundary conditions. As mentioned above, these boundary conditions an the respectively generated charging schedules are logged by storing the collected data in a memory.

Starting from an objective function with weighted objectives, the system then, in an offline process, learns weights for the objective function. This is done, for example, in an optimization process that adjust the individual weight until a determination criterion is met. Such optimization routines themselves are known in the art and may be selected appropriately according, for example, the complexity of the function or amount of data available.

Once the offline optimization is completed, the weights are used to define the objective function based on which the further optimization of the second charging schedule is then performed in the second phase. While the optimization in the second phase (and the charging according to the second charging schedule) can be done using a scheduler also used for generating the first charging schedules, the optimization of the weights is made preferably by another entity. Such distribution of tasks increases the overall performance, because the processor of the scheduler does not need to "waste" its processing capability by optimizing the weights simultaneously with generating the first charging schedules, which is slow anyway. However, it would generally be possible that the optimization of the weights is done at times of low computational load, for example during the night. In that case the system does not need to transfer the logged data an can compute weights internally, using a single processor. Generally, the system comprises processing means which may be realized by a single or a plurality of processors cooperatively computing the charging schedules and/or the weights for the objective function.

The charging scheduler can specify, for each charging station, at least one of charging or discharging power, charge current, charge curve and charge amount in the first phase or in the second phase. Preferably, the system is not limited to charging of vehicles but the charging schedules includes charging and discharging a stationary battery for which the system comprises a stationary battery charger.

Usually, energy that is available for charging is taken from a grid or from a photovoltaic system that might be present at the charging station or the site of the charging station. However, the photovoltaic system might be enhanced by integrating the stationary battery as an energy storage. Previously, the charging of a dedicated photovoltaic energy buffer is controlled only locally by the photovoltaic system itself, without considering overall system requirements. Advantageously according to a preferred embodiment of the invention, an energy storage in form of the stationary battery can be used by the entire charging management system and does not need individual control, which is independent from the charging system for the vehicles.

Further, for the charging process, the stationary battery can be treated in addition to charging the vehicles as one additional battery to be charged /discharged and, thus, the scheduler can easily integrate the stationary battery. The necessary adaptation of the optimization process is performed by an adaptation of the hierarchy in the first phase and, if needed, by generating new base objectives. Specific objectives considering the stationary battery could be a target state of charge, a lower threshold for the discharge, of an increase of $CO_2$ emission for the overall charging/discharging of connected vehicles and the stationary batteries. Even a change of a battery used as a buffer can quickly be accomplished and reflected by adapted base objective and/or hierarchy. This is particularly important if the stationary batteries are second life batteries which already accumulated a high number of charging an discharging cycles. According to the actual status of such stationary battery, the hierarchy of the respective objective, for example protection of the battery by defining upper /lower limits for the state of charge and/or the charging and/or discharging current, can be adapted. After The adaptation, the system is operated in the first phase, to which the system may automatically switch, when an adaptation of the objectives and/or the hierarchy is detected.

The stationary battery can be used to buffer energy and thus to alleviate peaks of required energy for the public grid. Such supplementation could be used to reduce the amount of energy consumed from the grid. The battery can then use electrical energy stored in times with low energy costs. On the other hand, the primary source for charging the stationary battery can be selected, for example, only renewable energy is stored in the buffer (stationary battery). In case that there is a demand for green (renewable) energy, this could be provided, at least partially, in situations, when the energy produced by a photovoltaic system or the like is not sufficient. However, the source of energy that is available for charging the stationary battery can dynamically change. During the winter it could be reasonable to use the stationary battery primarily to reduce costs while during summer time the aspect of buffering photovoltaic energy is dominant. Such dynamic aspects would require the adaptation of the optimization process and can, according to the present invention, easily be adjusted by the operator rearranging the objectives in the hierarchy. Finally, the stationary battery can be used as an emergency power supply ensuring operation of the system.

Alternatively or in addition, the charging schedule can be generated or generated again upon request, wherein the request includes at least one of information on the charging objectives and information on their hierarchy.

In the determining step in the first phase, the hierarchy of the charging objectives can be set in accordance with a preset hierarchy or can be determined by modifying the preset hierarchy based on the information included in the request. This information may be provided by an operator of a charging system. The objectives included in the hierarchy can be communicated to the processor determining the weights for the objective function so that the objectives in the objective function always correspond to the objective in the hierarchy. Alternatively, the objective function always includes all base objectives.

The information on the charging objectives can indicate the most frequently desired aspects by users, and the information on the hierarchy can indicate the operator's individual preferences which shall be taken into account for the operator's charging system.

Typically, the lexicographic optimization in the first phase is more time consuming than the weighted-sum approach and the method can determine whether the configured objective hierarchy can be adapted in order to accelerate the optimization without impact on the optimization results and automatically adapt the hierarchy if applicable. For this purpose, the method can further comprise at least one of the steps:

- reducing the number of the charging objectives by determining and removing, from the obtained charging objectives, at least one of a redundant charging objective, a charging objective that is not applicable and a charging objective that is automatically fulfilled, wherein the reduced number of the charging objectives corresponds to the number of optimization problems to be solved in the lexicographic optimization; and

- reducing the number of the optimization problems by combining at least two charging objectives that are non-conflicting in one common optimization problem.

The electric vehicle charging system for the charging of electric vehicles comprises processing means for obtaining charging objectives to be considered in generating a first charging schedule for one or more charging stations and possibly a stationary battery charger of the charging system, means for determining a hierarchy of the charging objectives and means for generating the first charging schedule by performing a lexicographic optimization based on the hierarchy of the charging objectives. The processing means further generates the second charging schedules in the second phase. The processing means provides the first charging schedules in the first phase and the second charging schedule in the second phase to allow controlling the one or more charging stations and possibly the stationary battery charger according to the first or second charging schedule.

The electric vehicle charging system may further comprise a scheduling apparatus comprising a processor realizing at least part of the processing means, charging stations for charging electric vehicles, a stationary battery and its stationary battery charger and a controlling apparatus for controlling charging stations and possibly the stationary battery charger based on the first or second charging schedule provided by the scheduling apparatus.

In addition, the controlling apparatus can be configured to transmit, to the scheduling apparatus, a request for generating the charging schedule, wherein the request includes at least one of information on the charging objectives to be considered and information on the hierarchy, and the scheduling apparatus is configured to determine the hierarchy of the charging objectives based on the information included in the request.

In addition, the controlling apparatus can be configured to determine, in the first phase at least one charging objective selected by an operator of the system and to transmit the request including information on the at least one selected charging objective to the scheduling apparatus, which is configured to modify a preset hierarchy of the charging objectives based on the at least one selected charging objective to determine the hierarchy. Preferably, the system reacts upon any change in the hierarchy, be it a rearrangement or addition or deletion of an objective, be restarting the first phase. The transition to the second phase may be triggered automatically when sufficient data is logged, for example when a predefined number of first charging schedules has been generated.

Alternatively or in addition, the controlling apparatus can be configured to determine, in the first phase, a hierarchy of the charging objectives selected by an operator and to transmit the request including information on the selected hierarchy to the scheduling apparatus, wherein the scheduling apparatus determines the hierarchy in accordance with the selected hierarchy.

The scheduling apparatus and the controlling apparatus according to the disclosure each comprise a processing unit configured to carry out the steps described above. The processing unit can be a controller, a microcontroller, a processor, a microprocessor, an application specific integrated circuit (ASIC), a field-programmable gate-array (FPGA) or any combination thereof.

Embodiments of the inventive method and system are now described with respect to the attached drawings, in which

FIG. 1 shows a schematic of the system according to an embodiment of the present disclosure,

FIG. 2 illustrates mapping of base objectives to an objective hierarchy configuration,

FIG. 3 shows a block diagram of the scheduling apparatus, and

FIG. 4 shows a flowchart of the method according to an embodiment of the present disclosure.

In the figures, same reference numbers denote same or equivalent structures. The explanation of structures with same reference numbers in different figures is avoided where deemed possible for sake of conciseness.

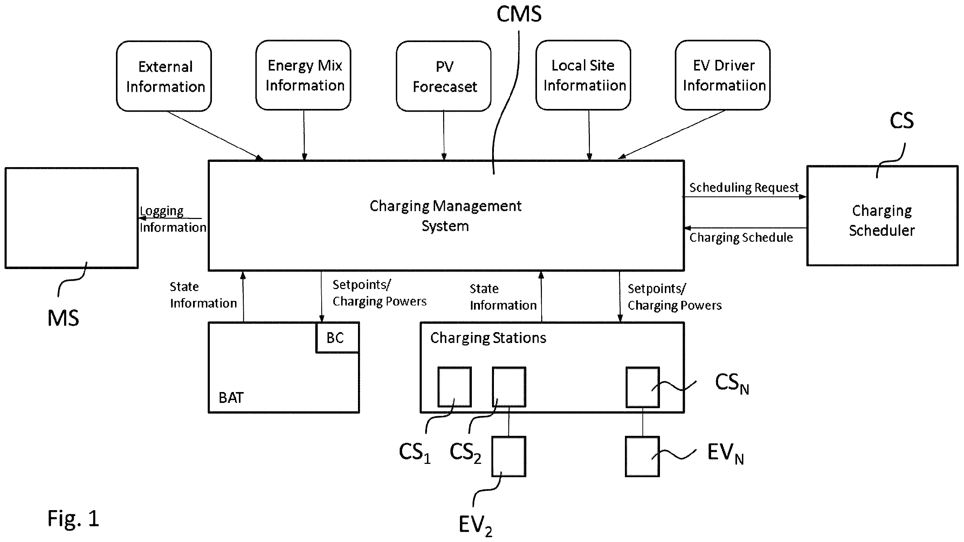

Fig. 1 shows a block diagram of the electric vehicle charging system. The electric vehicle charging system comprises a plurality of charging stations $CS_1$, $CS_2$, ... , $CS_N$ for charging batteries of electric vehicles $EV_1$, $EV_2$, ... , EVrr, a charging scheduler CS for generating first and second charging schedules and a charging management system CMS as a controlling unit for controlling the charging stations $CS_1$, $CS_2$, ... , $CS_N$ based on the respective first or second charging schedule. The charging scheduler CS (the scheduling apparatus) could also be integrated into the charging management system CMS (the controlling apparatus). The charging stations $CS_1$, $CS_2$, ..., $CS_N$ could be, for example, public charging stations or charging stations at a company site for charging employees' EVs. Further, the charging management system CMS is connected to a stationary battery BAT for buffering electrical energy that may be equipped with or connected to a stationary battery charger BC. The stationary battery charger BC is controlled by the charging management system CMS, which controls charging of the battery via the stationary battery charger BC or energy retrieval for discharging the stationary battery in order to use the energy for charging vehicles by the charging stations $CS_1$, $CS_2$, .... $CS_N$.

The charging management system CMS iteratively sends control signals to the charging stations $CS_1$, $CS_2$, ... , $CS_N$ and to the stationary battery charger BC to control at least the respective charging (or discharging) power of the charging station $CS_1$, $CS_2$, ... , $CS_N$ and the stationary battery charger BC The charging stations $CS_1$, $CS_2$, ... , $CS_N$ and the stationary battery BAT transmit, for example, information on connection states (only the charging stations $CS_1$, $CS_2$, ... , $CS_N$), maximum and minimum charging powers of the connected electric vehicles $EV_2$, ... , $EV_N$, battery levels of the connected electric vehicles $EV_2$, ... , $EV_N$, and the stationary battery BAT etc., to the charging management system CMS. Furthermore, the charging management system CMS might get information from the drivers of connected EVs (EV Driver Information), like departure time or desired state of charge. All or a part of the charging stations $CS_1$, $CS_2$, ... , $CS_N$ might be attached to a site with further energy consumers and/or generators, e.g., a company building with a certain base consumption and a photovoltaics system. Additionally or alternatively, a photovoltaics system may be provides that is exclusively used in the charging management system CMS. In order to advantageously adapt the charging schedule taking into consideration the energy delivered by the photovoltaic system, the charging management system CMS receives information on estimated energy delivered by the photovoltaic system (PV Forecast). The charging management system CMS might take into account information from the local site for the charging management. Furthermore, the charging management system CMS receives external information, like electricity prices and driver information, like driver/vehicle ID, desired state of charge, expected time of arrival, desired charging time/power and battery condition (state of charge, temperature). Further, the charging management system CMS receives information on an energy mix that is supplied to the charging stations and that defines the primary sources (e.g. wind energy, nuclear energy,...) of the electrical energy that can be used to charge the vehicles and the stationary battery BAT. The system is also able to use photovoltaic energy that is available either locally for individual charging stations at sites with an individual photovoltaic system or photovoltaic systems that are exclusively producing electric energy for the charging management system. For the photovoltaic systems, the charging management system CMS receives forecasts for the expected amount of energy over time.

In order to provide appropriate charging powers, with which a certain objectives, like minimizing energy cost, reducing peaks of electrical load, minimizing waiting time of the vehicle users or maximizing the portion of regenerative energy used for charging the vehicles is achieved, the charging power to be supplied by each charging station $CS_1$, $CS_2, ... , CS_N$ is planned in advance by the charging scheduler CS with help of the inventive optimization-based approach.

In addition, the charging power for charging the stationary battery BAT or discharging power for discharging the stationary battery for contributing to the charging of the vehicles is planned by the charging scheduler CS. Including also a schedule for the charging and discharging of the stationary battery improves the flexibility of the system and therefor enables solutions to the optimization problems that could not be achieved without such stationary battery BAT. For example, in case that the portion of the renewable energy in the energy mix communicated to the charging management system CMS decreases, energy taken from the stationary battery BAT can be used to supplement the electrical energy supplied to the charging stations $CS_1$, $CS_2$, ...$CS_N$. On the other hand, in case that an exceptionally high amount of renewable energy is available, but only a low demand from users needs to be satisfied, the stationary battery can be charged. The stationary battery can then supplement renewable energy at a later point in time, when the portion of renewable energy in the energy mix decreases. Since the charging/discharging schedule for the stationary battery BAT is determined simultaneously and in the same optimization process, it can be avoided that independent schedules for the battery and the vehicles deteriorate the overall performance.

The charging management system CMS sends a scheduling request to the charging scheduler CS, which contains information relevant to compute the charging schedule. The charging scheduler CS then computes a schedule $\vec{P}$ = $[P_{1,1}, ... , P_{1,T}, ... , P_{N+1,1}, ... , P_{N+1,T}]$ of charging powers P for the N charging stations $CS_1$, $CS_2$, ... , $CS_N$ and the stationary battery charger BC for T time steps of length $\Delta t$ ahead and sends it back to the charging management system CMS. The entry $P_{n,t}$ of the schedule represents the (possibly negative) charging power of a charging station $CS_n$ or the stationary battery charger BC in time step t. The charging scheduler CS computes a charging schedule taking into account M different objectives $f_1, ... , f_M$. Such objectives could be, for example, minimization of electricity cost, maximization of satisfaction of vehicle drivers (this could be further split into multiple objectives if different vehicle drivers can have different priorities), minimizing peak loads, maximizing photovoltaics self-consumption, minimizing vehicle battery degradation, maximizing provisioning of grid services, maximizing portion of renewable energy and/or minimizing the amount of discharging of the vehicle batteries, and protection for the stationary battery BAT.

The computation of first charging schedules is done by constructing and solving an optimization problem of the form

$$\min_{\vec{P}}\{ f_1(\vec{P}), ... , f_M(\vec{P})\} \qquad (5)$$

$$\text{s.t. } \vec{P} \in X, \qquad (6)$$

where X is the set of feasible solutions, defined by different constraints. A simple example of such a problem with two objectives is the following:

$$\min f_1 = \sum_{n=1}^{N} \sum_{t=1}^{T} c_t \cdot \Delta t \cdot P_{n,t} \qquad (7)$$

$$f_2 = -\sum_{n=1}^{N} E_{n,T} \qquad (8)$$

$$s.t. \quad 0 \leq P_{n,t} \leq P_n^{max} \qquad \forall n, \forall t \qquad (9)$$

$$E_{n,t} = E_n^{init} + \sum_{k=1}^{t} \Delta t \cdot P_{n.k} \qquad \forall n, \forall t \qquad (10)$$

$$0 \leq E_{n,t} \leq C_n \qquad \forall n, \forall t \qquad (11)$$

The first objective function $f_1$ minimizes the electricity cost assuming an electricity price $c_t$ per energy unit in time step t. The second objective function $f_2$ maximizes the sum of the energy levels of the electric vehicles $EV_1$, $EV_2$, ... , $EV_N$ at the end of the planning horizon. The constraint in (9) ensures that an electric vehicle n (connected to the charging station $CS_n$) cannot charge with a power higher than a certain maximum power $P_n^{max}$ or lower than 0 (i.e., the problem specification does not allow discharging). It is to be noted that the above given example considers a system in which only electrical vehicles are charged. In a system comprising a stationary battery BAT such a constraint can only be used for time intervals in which the stationary battery BAT needs to be recharged. In order to allow discharging of the stationary battery BAT, this constraint needs to be released for the battery. The constraint in (10) sets the energy levels $E_{n,t}$ of the EVs (and possibly the stationary battery BAT if comprised by the system) in each time step t depending on the charging powers and the initial energy levels $E_n^{init}$. The constraint in (11) ensures the technical limitation that the energy charged in a battery of an electric vehicle $EV_1$, $EV_2$, ... , $EV_N$ neither falls below zero nor exceeds the capacity $C_n$ of the battery, and, similarly for the stationary battery BAT. Note, that this exemplary problem description assumes that at each of the N charging stations $CS_1$, $CS_2$, ..., $CS_N$ an electric vehicle $EV_1$, $EV_2$, ... , $EV_N$ is plugged in for the complete planning horizon. For a stationary battery BAT, this assumption is fulfilled in any case. In order to solve the problem, variables like N, T, $\Delta t$, $c_t$, for all t = 1, ..., T, $P_n^{max}$ for all n = 1, ..., N, and so on, have to be filled with concrete values. Some of these values (e.g., the number T of time steps to plan ahead) might be configuration parameters of the charging scheduler CS. The remaining values have to be provided by the scheduling request of the charging management system CMS.

In the example problem, the two objectives are conflicting (assuming that the electricity prices $c_t$ are greater zero). This is a common situation. It is assumed that a certain hierarchy of objectives should be considered, where an objective at a higher level of the hierarchy is strictly prioritized over objectives at lower levels of the hierarchy. Without loss of generality, let objective function $f_i$ be at a higher level of the hierarchy than an objective function $f_j$, if i < j. A feasible solution S* of the optimization problem is optimal with respect to a given hierarchy, if it optimizes the objective function $f_1$ at the highest level and if there is no other solution, which improves one of the objectives ($f_i$, i > 1) at the lower levels without worsen one of objectives ($f_j$, j < i) at a higher level compared to S*.

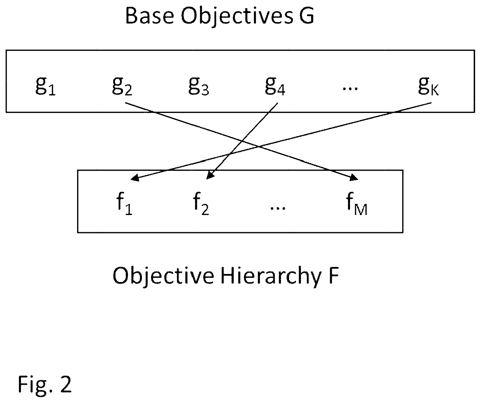

The electric vehicle charging system allows to configure the considered objective hierarchy in order to take different preferences of different operators into account. This is done by providing a set $G = \{g_1, ... , g_k\}$ of base objectives and allowing the operator to specify a hierarchy $F = (f_1, ... , f_M)$ with $f_i \in G$ for all i = 1, ... , M and $f_i \neq f_j$ for $i \neq j$ for objectives to be considered in the optimization process. The hierarchy defines the sequence in which for the plurality of charging objectives selected from the entirety of base objectives, the single objective problems shall be solved. This is illustrated in Fig. 2 for a plurality of charging objectives $f_1$, $f_2$, ... $f_M$ selected from the entirety of base objectives $g_1$, $g_2$, $g_3$, ... $g_K$. Thus, the operator can decide which of the base objectives $g_1$, ... , $g_k$ are considered in the charging scheduling and how the objectives are prioritized against each other. The entirety of base objectives is defined in the design phase of the scheduler. However, since the charging objectives may be selected from the base objectives and ordered by the hierarchy, the invention allows a very flexible adaptation of the scheduling according to the needs of the operator of the system. Since the stationary battery BAT is included in the scheduling process, this includes not only the charging of the vehicle batteries but also the charging/discharging of the stationary battery, which can be used as a buffer. For enabling the operator to adjust the hierarchy.

A monitoring system MS is connected to the charging management system CMS. Information about the first charging schedules and boundary conditions and demands resulting in the respective first charging schedule is logged using a memory of the monitoring system MS, but also feedback from vehicle drivers can be logged in the monitoring system MS. Additionally, malfunction of a charging station can be communicated to the monitoring system MS and the operator can then react on this information and adjust the hierarchy accordingly. The main function of the monitoring system MS is, however, to enable offline determination of an objective function with weighted objectives that lead to similar results as the lexicographic optimization, comparable boundary conditions assumed. The process of determining the weights for such weighted sum approach that is used to determine second charging schedules in the second phase will be explained below.

The lexicographic optimization as described above is used in the first phase to solve the charging scheduling problem with respect to a given objective hierarchy configuration and to provide first charging schedules accordingly. So within the limits caused by the available base objectives, and a possible configuration of charging objectives can be addressed. With the lexicographic optimization approach, a series of M subproblems is solved, wherein a subproblem is solved first, which only considers the highest prioritized objective function $f_1$ and the original constraints:

$$\min_{\vec{P}} \; f_1(\vec{P}) \qquad\qquad (12)$$

$$\text{s.t.} \; \vec{P} \in X \qquad\qquad (13)$$

Let $y_1$ be the solution - the optimal objective value - of this subproblem. The second subproblem only considers the second most important objective function $f_2$ and ensures through an additional constraint that the solution is optimal in the sense of the previous subproblem:

$$\min_{\vec{P}} \; f_2(\vec{P}) \qquad\qquad (14)$$

$$\text{s.t.} \; \vec{P} \in X \qquad\qquad (15)$$

$$f_1(\vec{P}) = y_1 \qquad\qquad (16)$$

Analogously, the solution $y_2$ of the second subproblem is then used to construct a further constraint for the third subproblem, which considers only the objective function $f_3$, and so on, up to the M-th problem considering only objective $f_M$. This approach does not require the specification of weights for the individual objectives for each possible configuration of objectives and allows to quickly realize a system generating and applying charging schedules after the system configuration has changed or different priority is given to certain objectives. Changing the charging objectives selected from the entirety of base objectives and/or objective hierarchy F, only changes the considered objectives and their sequence of solved subproblems. Although, an addition of a new base objective requires redesign of the scheduler, compared to the weighted-sum all approach, this makes it also easy to extend the charging scheduler by providing a further base objective $g_{K+1}$.

The objective hierarchy to be considered could be set in form of a list in a configuration file by an operator. The configuration file is stored in the charging scheduler CS or transmitted with the request. Furthermore, it would be possible to allow the charging management system CMS to dynamically specify the objective hierarchy to consider it as part of the scheduling request. In addition, the charging management system CMS can automatically adapt the objective hierarchy to changing conditions and/or operator settings, wherein certain setting types or a frequency of these settings is assigned to a certain priority/ranking of an objective (single-objective problem). Alternatively or in addition, the charging management system CMS can continuously estimate one or more conditions, e.g., utilization rate, peak load, number of defective charging stations, electricity price, excess electricity, etc., compare them with a corresponding preset threshold value and increase (or reduce) the priority/ranking of an objective assigned to the condition if the threshold is reached. In this way, with respect to the scheduling problem (7) to (11), if the electricity price falls below a certain value, minimizing the electricity cost can be automatically changed from the most important objective to the second objective and maximizing the sum of the energy levels can be automatically changed from the second objective to the most important objective. On the other hand, when the photovoltaic forecast indicates a decrease of energy that can be provided, the objective regarding a target state of charge of the stationary battery can be repositioned to have a lower priority, or even cancelled from the list.

Typically, a higher number of objectives results in a higher runtime since a higher number of subproblems has to be solved. To counter this undesirable effect, it is appropriate to reduce the number of objectives in the hierarchy before the actual optimization, if this does not impact the results of the optimization. For example, if two objectives $f_i$ and $f_{i+1}$ at subsequent levels of the hierarchy are non-conflicting, they could be optimized simultaneously in one common subproblem, which optimizes the sum $f_i + f_{i+1}$ of the objectives and thus the objective hierarchy could be automatically changed to $F = ( f_1, \dots, f_{i-1}, f_i + f_{i+1}, f_{i+2}, \dots, f_M)$.

Further, if an objective $f_i$ is redundant, since it is already implied by another objective $f_j$, $j < i$, at a higher level of the hierarchy (e.g., the objective of charging EVs as fast as possible typically implies the objective of charging EVs as much as possible), the objective $f_i$ could be automatically removed from the hierarchy. Analogously, if an objective is not applicable or is automatically fulfilled, respectively, due to constraints (e.g., the objective of minimizing discharging is automatically fulfilled if the minimum charging power of all EVs is o), this objective could be removed from the hierarchy.

The monitoring system MS comprises an interface connecting it with the charging management system CMS. This interface allows to transfer data for data logging in a memory included in the monitoring system CMS. The monitoring system comprises, like the charging scheduler CS, a processor connected to the memory and the interface. Based on the data logged in the memory, the processor calculates weights to enable generation of an objective function with weighted objectives that delivers the same or sufficiently similar results like the lexicographic optimization in the first phase.

Based on the logged data an optimization is performed fitting the weights in the objective function such that simulated results using the logged boundary conditions result in the same or a similar second charging schedule like the first charging schedule. When a termination condition is fulfilled, for example the remaining differences between the first and second charging schedules are below a given threshold, the system switches to operation in the second phase.

The determined weights are transmitted via the charging management system CMS and the interfaces to the charging scheduler CS. In in the charging scheduler CS the objective function is created based on the objectives of the hierarchy used in the first phase. Alternatively, the objective function may be generated in the monitoring system MS and transferred to the charging scheduler CS.

Once the objective function with weighted objectives is available for the charging scheduler, second charging schedules are generated by the charging scheduler CS. These second charging schedules are then, like in the first phase the first charging schedules, transmitted to the charging management system CMS as control unit. The charging management system CMS then controls the charging (and possibly discharging) of the electric vehicles and, if included in the system, the stationary battery BAT.

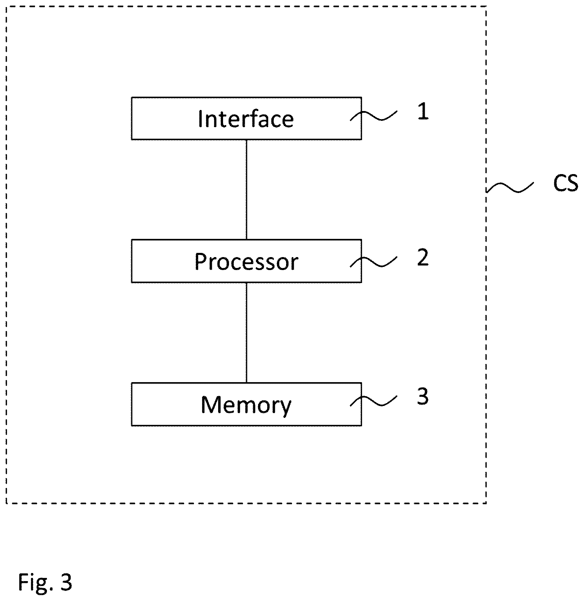

Fig. 3 shows a block diagram of the charging scheduler CS and the monitoring system MS. The charging scheduler CS and the monitoring system MS each comprise an interface 1, with which the charging scheduler CS and the monitoring system MS are connected to the charging management system CMS, a processor 2 configured to generate the charging schedule or determine the weights, and a memory for storing data, e.g., information on the objectives and the hierarchy, or logged data. The generation of the first or second charging schedule by the processor 2 of the charging scheduler could be implemented as software in C/C++. To construct and solve the subproblems of the lexicographic optimization according to a configured objective hierarchy, an appropriate solver and its corresponding API (application programming interface) could be used. In the case of only linear objectives and constraints, the SCIP (Solving Constraint Integer Programs) solver disclosed in A. Gleixner, et al.: "The SCIP optimization suite 5.0" Tech. Rep. 17-61, ZIB, Takustr.7, 14195 Berlin, 2017 could be used. The interface 1 from/to the CMS could be realized based on HTTP(S) (Hypertext Transfer Protocol (Secure)) and a REST (Representational State Transfer) protocol. In the second phase the optimization of the charging schedule is performed in a way known in the prior art for objective functions with weighted objectives. It is to be noted that the invention is not about a specific way of implementing the generation of a charging schedule based on a weighted sum approach, but determining, based on generated first charging schedules using the lexicographic optimization in a first phase, weights such that second charging schedules can then be generated using the generally known weighted sum approach. The determination of the weights can be achieved offline by a separate processor thereby not deteriorating the performance and function of the system operating already in the mode according to the first phase.

It can be expected that not all operators are able to decide on an objective hierarchy since this requires a fundamental understanding of how different hierarchies affect the scheduling results. Thus, the charging management system CMS or the charging scheduler CS can provide a reasonable default hierarchy in case that a request does not specify charging objectives to be used and their hierarchy. In order to refine the default set of charging objectives to be used from the base objectives and the charging objectives' hierarchy, the configurations chosen by the different operators could be collected on a central server. From this information, a default hierarchy, which is suited for most users/operators, could be derived. This could be, for example, the hierarchy, which is chosen most frequently by the users/operators. Another option could be to define a distance measure on objective hierarchies and to set the default hierarchy to the hierarchy, which minimizes the average distance to the hierarchies chosen by the users/operators.

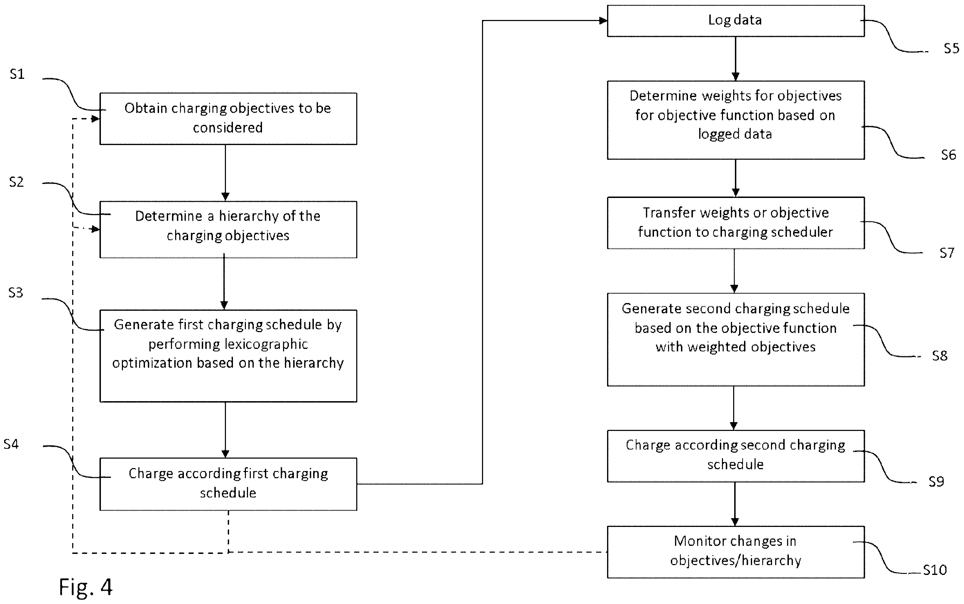

FIG. 4 shows a simplified flowchart of an embodiment of the method according to the present invention. In step S1, the base objectives $g_1, ..., g_k$ are provided by the scheduler to the charging management system CMS. The selection of charging objectives $f_1, ...f_M$ is performed in step S2, based on a respective definition in a request received in step S2 from the charging management system CMS via the interface 1 and a charging objective hierarchy for the selected objectives is generated from a configuration or based on the request received from the charging management system CMS. This hierarchy might be adapted by combining and/or deleting charging objectives as explained above. In step S3, the processor 2 generates the first charging schedule for a certain time interval by performing a lexicographic optimization as described above. The resulting first charging schedule is transferred to the charging management system CMS and based on this first charging schedule the charging stations including the stationary battery charger BC if included in the system are controlled in step S4. The charging management system CMS monitors the current state with respect to conditions triggering that a new request is sent to the scheduler. The steps S1 to S3 are executed again, if a (new) request is received from the charging management system CMS. A new request may be sent from the charging management system CMS at the end of the time interval and/or when an efficient change in the state of the charging stations, for example, a changing number of vehicles connected to the charging stations, is recognised. Of course, other conditions which require an adaptation of the charging schedule may be defined causing the charging management system CMS to transmit a request to the scheduler. The hierarchy and/or the charging objectives $f_1, ...F_M$ can be automatically adjusted to changing conditions, wherein at least one condition of the charging management system CMS is assigned to a corresponding base objective $g_1, ... , g_k$ shown in Fig. 2 and at least one state or change of the condition is assigned to a certain position in the hierarchy $f_1, ... , or f_M$ as shown in Fig. 2. The charging management system CMS determines the at least one state/change by continuously evaluating the at least one condition and, when the state/change is determined, adapts the information on the to be selected charging objectives and their position in the hierarchy accordingly, if necessary. Alternatively, a pattern/set of states/changes of one or more conditions can be assigned to a certain hierarchy, which is set when the pattern/set is determined.

While the system charges, in the first phase, the electric vehicles according to the first charging schedule, data comprising in formation on the first charging schedules and the condition under which these first charging schedules are generated are logged in step S5. These data are used to determine weights for objectives to create an objective function with weighted objectives, which is used in the second phase to determine second charging schedules.

The weights are determine while still the system is in the first phase so that operation of the electric vehicle charging system proceeds using the lexicographic optimization. After the weights have been determined in step S6, the weights or the entire objective function is transferred to the charging scheduler CS in step S7.

The charging scheduler CS then starts generating second charging schedule based on the objective function with weighted objective in step S8, which is the transition of the system to the second phase. In the second phase, the charging management system CMS controls charging of the electric vehicles according to the second charging schedules, which are, similar to the first phase repetitively generated, however, at a higher repetition rate, because the optimization routine using the weighted sum approach is faster than the lexicographic optimization. While the system is operated in the second phase, any possible change in the objectives or the hierarchy in case there is no change in the selection of objectives, is monitored. This ensures that the system can automatically switch to the first phase when the objectives change or the hierarchy is adapted. This might be the case for example when a second life battery is exchanged as stationary battery BAT, which requires to adapt priority of the objective defining the protection of the battery. The system will automatically switch to the first phase and generate first charging schedules again using the adapted hierarchy. Simultaneously, the system starts to log data again based on which new weights can be determined for creating a new objective function.

The determination of weights can start automatically as soon as a predetermined amount of data is collected by logging the data obtained in the first phase.

It will be apparent to those skilled in the art that various modifications and variations can be made to the structure of the disclosure without departing from the scope or spirit of the disclosure. In view of the foregoing, it is intended that the preset disclosure covers modifications and variations of this disclosure provided they fall within the scope of the following claims und their equivalents.

**Claims**

1.   A computer implemented method for charging electric vehicles by an electric vehicle charging system, the method comprising the steps of:

in a first phase, generating a first charging schedule by performing a lexicographic optimization based on a hierarchy of the charging, wherein charging objectives to be considered in generating the first charging schedule for one or more charging stations of the electric vehicle charging system are obtained, and a hierarchy of the charging objectives is determined; and
charging of the electric vehicles is controlled according to the first charging schedule; and in a second phase, generating a second charging schedule by performing an optimization based on an objective function with combined weighted objectives, wherein

the weights are learned in an offline optimization based on logged data from the first phase; and
charging of the electric vehicles is controlled according to the second charging schedule.

2.   The computer implemented method according to claim 1, wherein
the first and the second charging schedule specify, for each charging station, at least one of charging or discharging power, charge current, charge curve and charge amount.

3.   The computer implemented method according to claim 1 or 2, wherein

the method automatically switches to the first phase upon request or when a new hierarchy of objectives is determined and a respective new first charging schedule is generated, and, based on logged data which are logged after charging of vehicles is controlled based on the new first charging schedule is started, learns adapted weights for generating a respective new second charging schedule.

4. The computer implemented method according to any of the proceedings claims wherein
   learning of weights is started when an amount of first charging schedules that are generated in the first phase exceeds a predefined threshold.

5. The computer implemented method according to any of the preceding claims, wherein
   the logged data comprise the first charging schedules and system state information.

6. The computer implemented method according to claim 1, wherein generating charging schedules and charging according to such schedule includes charging of at least one stationary battery in the first and the second phase.

7. A program that, when running on a computer or loaded onto a computer, causes the computer to execute the steps of the computer implemented method according to claim 1.

8. An electric vehicle charging system for scheduling charging of electric vehicles, comprising:

   processing means configured to

   obtain, charging objectives to be considered in generating a first charging schedule for one or more charging stations of an electric vehicle charging system;
   determine a hierarchy of the charging objectives; and
   generate the first charging schedule by performing a lexicographic optimization based on the hierarchy of the charging objectives, and
   to provide the first charging schedule to control the one or more charging stations according to the first charging schedule in a first phase,

   a memory configured to log data in the first phase, wherein
   the processing means is further configured to

   learn weights for an objective function with combined weighted objectives in an offline optimization based on the logged data from the first phase,
   generate a second charging schedule by performing an optimization of the objective function, and
   to provide the second charging schedule to control the one or more charging stations according to the second charging schedule in a second phase.

9. The electric vehicle charging system according to claim 8, comprising a scheduling apparatus having a processor realizing at least part of the processing means and configured to obtain the charging objectives, determine the hierarchy, generate the first charging schedule and the second charging schedule, and a controlling apparatus for controlling the charging stations according to the first or the second charging schedule.

10. The charging system according to claim 9, the system comprising at least one charging station for charging electric vehicles, a stationary battery and stationary battery charger, wherein the controlling apparatus for controlling the charging stations is further configured for controlling the stationary battery charger based on the first or second charging schedule.

11. The electric vehicle charging system according to claim 9 or 10, wherein

    the controlling apparatus is configured to transmit, to the scheduling apparatus, a request for generating the first charging schedule;
    the request includes at least one of information on the charging objectives and information on the hierarchy, and
    the processor is configured to determine the hierarchy of the charging objectives based on the information included in the request.

12. The electric vehicle charging system according to claim 11, wherein

the controlling apparatus is configured to determine at least one charging objective selected by a user and to transmit the request including information on the at least one selected charging objective, and
the processor is configured to modify a preset hierarchy of the charging objectives based on the at least one selected charging objective to determine the hierarchy.

13. The electric vehicle charging system according to claim 11, wherein

the controlling apparatus is configured to determine a hierarchy of the charging objectives selected by a user and to transmit the request including information on the selected hierarchy, and
the processor is configured to determine the hierarchy in accordance with the selected hierarchy.

14. The electric vehicle charging system according to any one of claims 9 to 13, wherein
the scheduling apparatus is configured to provide information on the objectives comprised by the determined hierarchy to an objective function determination unit, wherein the objective function determination unit is configured to learn the weights and to transmit the objective function with weighted objectives or the determined weights to the scheduling apparatus.

Fig. 1

CS — Charging Scheduler

CMS — Charging Management System

Scheduling Request / Charging Schedule

EV Driver Information

Local Site Information

PV Forecaset

Energy Mix Information

External Information

Setpoints/Charging Powers

State Information

Charging Stations

$CS_1$, $CS_2$, $CS_N$

$EV_2$, $EV_N$

BC / BAT

Logging Information

MS

Base Objectives G

Objective Hierarchy F

Fig. 2

Fig. 3

Europäisches Patentamt

European Patent Office

Office européen des brevets

**EUROPEAN SEARCH REPORT**

Application Number

EP 23 20 5668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/327443 A1 (LIMMER STEFFEN [DE]) 13 October 2022 (2022-10-13) | 1-4,6-14 | INV. B60L53/63 |
| A | * paragraph [0002] - paragraph [0057]; figures 1,3 * | 5 | B60L53/64 B60L53/66 B60L53/67 |
| Y | MOGHADDASS RAMIN ET AL: "Smart Control of Fleets of Electric Vehicles in Smart and Connected Communities", IEEE TRANSACTIONS ON SMART GRID, IEEE, USA, vol. 10, no. 6, 1 November 2019 (2019-11-01), pages 6883-6897, XP011751264, ISSN: 1949-3053, DOI: 10.1109/TSG.2019.2913587 [retrieved on 2019-10-18] | 1-4,6-14 | B60L53/68 B60L55/00 |
| A | * page 6884, column 1, paragraph 3 - page 6892, column 1, paragraph 4 * | 5 | |
| A | US 2022/188946 A1 (MOURA SCOTT [US] ET AL) 16 June 2022 (2022-06-16) * paragraph [0141] - paragraph [0143] * | 1,4,7,8 | TECHNICAL FIELDS SEARCHED (IPC) B60L H02J G06Q |

The present search report has been drawn up for all claims

| Place of search | Date of completion of the search | Examiner |
|---|---|---|
| The Hague | 14 March 2024 | Cuk, Vladimir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 5668**

This annex lists the patent family members relating to the patent documents cited in  the above-mentioned European search report.
The members are as contained in the European Patent Office EDP file on
The European Patent Office is in no way liable for these particulars which are merely given for the purpose of information.

**14-03-2024**

| Patent document cited in search report | Publication date | Patent family member(s) | Publication date |
|---|---|---|---|
| US 2022327443    A1 | 13-10-2022 | NONE | |
| US 2022188946    A1 | 16-06-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8725306 B2

- US 20220327443 A1

**Non-patent literature cited in the description**

- **A. GLEIXNER et al.** The SCIP optimization suite 5.0. *Tech. Rep.*, 2017, 17-61